(19) Europäisches Patentamt
European Patent Office
Office européen des brevets

(11) **EP 4 238 639 A1**

(12) **EUROPÄISCHE PATENTANMELDUNG**

(43) Veröffentlichungstag:
**06.09.2023   Patentblatt 2023/36**

(21) Anmeldenummer: **22159519.2**

(22) Anmeldetag: **01.03.2022**

(51) Internationale Patentklassifikation (IPC):
*B01J 6/00* (2006.01)   *B01J 10/00* (2006.01)
*C01B 3/24* (2006.01)   *C01B 3/50* (2006.01)
*C01B 32/05* (2017.01)

(52) Gemeinsame Patentklassifikation (CPC):
**C01B 3/24; B01J 6/008; B01J 10/005; C01B 3/50; C01B 32/05;** C01B 2203/0272; C01B 2203/04; C01B 2203/043; C01B 2203/0833; C01B 2203/146; C01B 2203/148

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Burckhardt Compression AG**
**8404 Winterthur (CH)**

(72) Erfinder: **HARDER, Thorsten**
**8404 Winterthur (CH)**

(74) Vertreter: **Hepp Wenger Ryffel AG**
**Friedtalweg 5**
**9500 Wil (CH)**

(54) **VORRICHTUNG UND VERFAHREN ZUR PYROLYSE WASSERSTOFFHALTIGER VERBINDUNGEN**

(57)   Die Erfindung betrifft eine Vorrichtung (1) zur Erzeugung von Wasserstoff ($H_2$) und festem Kohlenstoff (11) durch thermische Zersetzung eines Zufuhrgases (Z) enthaltend Kohlenwasserstoffe, umfassend: einen Pyrolysereaktor (2) mit einen Reaktionsraum (3a) sowie einen oberhalb des Reaktionsraums (3a) angeordneten Sammelraum (5a), wobei der Reaktionsraum (3a) einen flüssigen Hochtemperaturwärmeträger (6) enthält; eine in den Reaktionsraum (3a) mündende Reaktorzuleitung (7); eine Einspeisung (19) für das Zufuhrgas (Z), wobei die Einspeisung (19) Fluid leitend mit der Reaktorzuleitung (7) verbunden ist; eine Heizvorrichtung (4) um dem Reaktionsraum (3a) Wärme zuzuführen; eine im Sammelraum (5a) angeordnete Ableitvorrichtung (12) zum Ableiten eines Stoffgemisches (S) aus dem Sammelraum (5a); eine ausserhalb des Pyrolysereaktors (2) angeordnete Separationsvorrichtung (37), wobei die Ableitvorrichtung (12) über eine Ableitung (14) mit der Separationsvorrichtung (37) verbunden ist, und wobei die Separationsvorrichtung (37) ausgestaltet ist zum Auftrennen des Stoffgemisches (S) in zumindest die Komponenten fester Kohlenstoff (11) und Wasserstoff ($H_2$) oder ein Gasgemisch enthaltend Wasserstoff ($H_2$); sowie einen Kompressor (23) zum Verdichten des der Reaktorzuleitung (7) zugeführten Fluides.

Fig. 1

**Beschreibung**

Die Erfindung betrifft eine Vorrichtung sowie ein Verfahren zur Pyrolyse wasserstoffhaltiger Verbindungen.

Zur Erreichung der Klimaschutzziele sind technologischen Lösung von besonderem Interesse, welche weiterhin eine Nutzung von fossilen Ressourcen erlauben unter gleichzeitiger Vermeidung von $CO_2$-Emissionen. Eine vielversprechende technische Lösung ermöglicht die Entkohlung von wasserstoffhaltigen Verbindungen, insbesondere von Kohlenwasserstoffen wie Erdgas bzw. Methan, durch eine Umwandlung der wasserstoffhaltigen Verbindung in zumindest reinen festen Kohlenstoff und Wasserstoff unter Anwendung einer Crack-/Pyrolysereaktion. Für den Fall von Methan lautet die grundlegende Formel wie folgt:

$$CH_4 \rightarrow C + 2H_2$$

mit

$$\Delta H = -74,5 \text{ kJ/mol}$$

Zur Durchführung dieser Reaktion sind Temperaturen von über 500°C erforderlich, wobei die Energiezufuhr in der Lage ist, die starken molekularen C-H-Bindungen (437 kJ/mol) aufzubrechen. Experimentelle Analysen haben ergeben, dass unter thermodynamischen Gleichgewichtsbedingungen bei Temperaturen von bis zu 1100°C Reaktionsraten von über 95% erreichbar sind.

Das Dokument WO2019/154732A1 offenbart ein Verfahren sowie eine Vorrichtung zur Pyrolyse wasserstoffhaltiger Verbindungen mit einem Flüssigmetallreaktor. Dieses bekannte Verfahren bzw. diese bekannte Vorrichtung ist zum kontinuierlichen Verarbeiten von wasserstoffhaltigen Verbindungen im industriellen Massstab nur bedingt geeignet. Es bedarf daher der weiteren Verbesserung der Reaktionsführung in der Herstellung von Wasserstoff mittels Methanpyrolyse.

Aufgabe der Erfindung ist es eine vorteilhaftere Vorrichtung bzw. ein vorteilhafteres Verfahren zur Herstellung von Wasserstoff aus einer wasserstoffhaltigen Verbindung, insbesondere aus Methan zur Verfügung zu stellen vorzuschlagen.

Diese Aufgabe wird gelöst mit einer Vorrichtung aufweisend die Merkmale von Anspruch 1. Die abhängigen Ansprüche 2 bis 11 betreffen weitere vorteilhafte Ausgestaltungen der Vorrichtung. Die Aufgabe wird weiter gelöst mit einem Verfahren aufweisend die Merkmale von Anspruch 12. Die abhängigen Ansprüche 13 bis 16 betreffen weitere vorteilhafte Verfahrensschritte.

Die Aufgabe wird insbesondere gelöst mit einer Vorrichtung zur Erzeugung von Wasserstoff und festem Kohlenstoff durch thermische Zersetzung eines Zufuhrgases enthaltend Kohlenwasserstoffe, umfassend einen Pyrolysereaktor mit einen Reaktionsraum sowie einen oberhalb des Reaktionsraums angeordneten Sammelraum, wobei der Reaktionsraum einen flüssigen Hochtemperaturwärmeträger enthält, sowie umfassend eine in den Reaktionsraum mündende Reaktorzuleitung, sowie umfassend eine Einspeisung für das Zufuhrgas, wobei die Einspeisung Fluid leitend mit der Reaktorzuleitung verbunden ist, sowie umfassend eine Heizvorrichtung um dem Reaktionsraum Wärme zuzuführen, sowie umfassend eine im Sammelraum angeordnete Ableitvorrichtung zum Ableiten eines Stoffgemisches aus dem Sammelraum, sowie umfassend eine ausserhalb des Pyrolysereaktors angeordnete Separationsvorrichtung, wobei die Ableitvorrichtung über eine Ableitung mit der Separationsvorrichtung verbunden ist, und wobei die Separationsvorrichtung ausgestaltet ist zum Auftrennen des Stoffgemisches in zumindest die Komponenten fester Kohlenstoff und Wasserstoff, oder fester Kohlenstoff und ein Gasgemisch enthaltend Wasserstoff, und umfassend einen Kompressor zum Verdichten des der Reaktorzuleitung zugeführten Fluides.

Die Aufgabe wird weiter insbesondere gelöst mit einem Verfahren zur direkten thermischen Zersetzung einer wasserstoffhaltigen Verbindung in festen Kohlenstoff und Wasserstoff, indem ein Kohlewasserstoffe enthaltendes Zufuhrgas verdichtet wird, das verdichtete Zufuhrgas anschliessend durch einen flüssigen Hochtemperaturwärmeträger geleitet wird und das Zufuhrgas im Hochtemperaturwärmeträger in ein Stoffgemisch gewandelt wird, das Stoffgemisch oberhalb des Hochtemperaturwärmeträgers in einem Sammelraum gesammelt wird, wobei das Stoffgemisch zumindest den festen Kohlenstoff und ein Gasgemisch enthaltend Wasserstoff umfasst, das Stoffgemisch einer dem Sammelraum nachgeordneten Separationsvorrichtung zugeführt wird und das Stoffgemisch in der Separationsvorrichtung von festem Kohlenstoff abgereichert wird, und das abgereicherte Stoffgemisch und der feste Kohlenstoff getrennt aus der Separationsvorrichtung abgeführt wird.

Die erfindungsgemässe Vorrichtung beziehungsweise das erfindungsgemässe Verfahren erlaubt es im industriellen Massstab ein Kohlenwasserstoffgas, vorzugsweise Methan, in Wasserstoff und Kohlenstoff umzuwandeln.

Unter dem Begriff "Pyrolyse" ist im Sinne der vorliegenden Erfindung eine thermische Zersetzung von Kohlenwasserstoffen, beispielsweise von Methan, in einer sauerstofffreien Atmosphäre zu verstehen.

Bei der erfindungsgemäßen Vorrichtung ist vorgesehen, dass der Pyrolysereaktor einen Flüssigmetallreaktor mit einem Reaktionsraum sowie einen oberhalb des Reaktionsraums angeordneten Sammelraum umfasst, wobei der Reaktionsraum zur Aufnahme des flüssigen Hochtemperaturwärmeträgers ausgelegt ist. Der Flüssigmetallreaktor umfasst einen Einlass für ein Zufuhrgas bzw. ein Reaktionsgas, wobei das Reaktionsgas vorzugsweise von Unten in den Flüssigmetallreaktor eingeführt wird, wobei der Flüssigmetallreaktor vorzugsweise einen porösen Abschnitt oder eine Reihe von Öffnungen aufweist, die entlang des unteren Teils des Flüssigmetallreaktors angeordnet sind, um das Reaktionsgas verteilt über die Innenquerschnittfläche, vorzugsweise im Wesentlichen gleichmässig verteilt, dem Flüssigmetallreaktor von unten zuzuführen, sodass das zugeführte Reaktionsgas den sich im Flüssigmetallreaktor befindlichen flüssigen Hochtemperaturwärmeträger durchströmt und dabei in Richtung zum Sammelraum hin aufsteigt.

Unter dem Begriff "Hochtemperaturwärmeträger" ist im Sinne der vorliegenden Erfindung ein Wärmeträger mit hoher thermischer Stabilität zu verstehen. Vorzugsweise ist der Hochtemperaturwärmeträger eine Metall- oder Salzschmelze. Bevorzugt sind Metallschmelzen. Vorteilhaft ist insbesondere der gute Wärmetransport der Metallschmelze zum Reaktionsgas. Weiter vorteilhaft ist die Möglichkeit der Kohlenstoffabtrennung aufgrund der Dichteunterschiede zwischen Metallschmelze und Kohlenstoff. Die Metallschmelze ist vorzugsweise ein Metall oder eine Metalllegierung. Eine geeignete Metallschmelze ist vorzugsweise ausgewählt aus der Gruppe umfassend Blei-Zinn-Lote, bleifreie Lote, Zinn und/oder Magnesium. Blei-Zinn-Lote besitzen niedrige Schmelzpunkte und erlauben somit schon bei Temperaturen um 200°C die Ausbildung einer homogenen Metallschmelze. Beispielsweise stellt Sickerlot mit einer Zusammensetzung von 63% Zinn und 37% Blei und einem eutektischen Punkt bei 183°C solch ein gut geeignetes Blei-Zinn-Lot dar.

Weiter bevorzugt ist die Verwendung katalytischer Zusätze zum Hochtemperaturwärmeträger insbesondere zu einer Metallschmelze, beispielsweise Zusätze von Bismut, Kupfer/Nickel oder Kupfer/Silber. Durch die Verwendung katalytischer Zusätze zu einer Metallschmelze kann die Reaktionstemperatur erniedrigt oder der Reaktionsumsatz erhöht werden. Ferner kann ebenfalls ein Anreichern der Metallschmelze mit gebildeten Kohlenstoffpartikeln eine autokatalytische Wirkung entfalten. Durch eine zusätzliche katalytische Wirkung der Metallschmelze kann die Umsetzung weiter erhöht werden.

Bei dem im Pyrolysereaktor ablaufenden Verfahren zur Erzeugung von Wasserstoff durch thermische Zersetzung einer wasserstoffhaltigen Verbindung, wird die als Reaktionsgas zugeführte wasserstoffhaltige Verbindung mit dem flüssigen Hochtemperaturwärmeträger in Kontakt gebracht, wobei die Verweilzeit der Reaktionsgases in dem flüssigen Hochtemperaturwärmeträger vorzugsweise einstellbar ist.

Eine Pyrolyse, bei der das Reaktionsgas mit einem flüssigen Hochtemperaturwärmeträger in Kontakt gebracht wird, weist den Vorteil eines guten Wärmetransports der Metallschmelze zum Reaktionsgas auf. Der flüssige Hochtemperaturwärmeträger, beispielsweise eine Schmelze, ist beweglich und erlaubt ein Durchströmen, sodass die gasförmige wasserstoffhaltige Verbindung, beispielsweise Methan, sich in einer Aufwärtsbewegung durch die Schmelze bewegt und durch diese Bewegung für eine ständige Erneuerung der Oberfläche sorgt. Die Möglichkeit beim erfindungsgemässen Verfahren den Druck und/oder die zugeführte Menge des Reaktionsgases anzusteuern erlaubt es den konvektive Wärmeeintrag kontrolliert anzusteuern bzw. kontrolliert zu beeinflussen. Die Verweilzeit der gasförmigen wasserstoffhaltigen Verbindung in dem flüssigen Hochtemperaturwärmeträger kann über den Druck des zugeführten Reaktionsgases und/oder die Menge des zugeführten Reaktionsgases und/oder den im Sammelraum anliegenden Druck einstellt werden. Eine Erhöhung der Verweilzeit hat den Vorteil einer wesentlichen Erhöhung des Umsatzes der thermischen Zersetzung.

In einer bevorzugten Ausführungsform wird der Druck und/oder die Fördermenge mit Hilfe eines Verdichters bzw. eines Kompressors, und/oder mit Hilfe von ansteuerbaren Ventilen eingestellt. Es kann sich zudem noch als vorteilhaft erweisen zur Steuerung der Reaktion dem Pyrolysereaktor Inertgase wie Stickstoff oder Argon zuzuführen.

Die Fließgeschwindigkeit des Reaktionsgases im Hochtemperaturwärmeträger kann vorzugsweise über die Druckdifferenz zwischen dem Druck des in des Reaktionsraum zugeführten Reaktionsgases und dem Druck im Sammelraum einstellt werden. Zudem besteht die Möglichkeit die Höhe des Reaktionsraumes bzw. den Füllstand des flüssigen Hochtemperaturwärmeträgers anzupassen bzw. derart auszulegen, dass eine gewünschte Fliessgeschwindigkeit des Reaktionsgases in der Schmelze erzielt wird. In bevorzugten Ausführungsformen liegt die Verweilzeit der gasförmigen wasserstoffhaltigen Verbindung in dem flüssigen Hochtemperaturwärmeträger im Bereich von 0,01 s bis 1000 s, bevorzugt im Bereich von 0,1 s bis 100 s, und vorzugsweise im Bereich von 0,2 s bis 10 s.

In bevorzugten Ausführungsformen erfolgt die Zersetzung der wasserstoffhaltigen Verbindung bei einer Temperatur im Bereich von 500°C bis 1500°C, bevorzugt im Bereich von 900°C bis 1400°C, und vorzugsweise im Bereich von 1000°C bis 1200°C. Eine Zersetzung des Gases bei einer Temperatur von ca. 500°C wird beispielsweise bei einer katalytischen Aktivität der Schmelze ermöglicht.

Eine Zuführung der benötigten Reaktionswärme erfolgt zweckmäßig über die Verbrennung von einem geringen Anteil des erzeugten Wasserstoffs bzw. von einem anderen Brennstoff. Auch kann eine elektrische Beheizung des Reaktionsraums vorgesehen sein.

Bevorzugte wasserstoffhaltige Verbindungen sind ausgewählt aus der Gruppe umfassend Methan, Ethan, höhere Kohlenwasserstoffe, Schwefelwasserstoff, Ammoniak und/oder deren Mischungen. Unter dem Begriff "höhere Kohlenwasserstoffe" sind im Sinne der vorliegenden Erfindung Kohlenwasserstoffe ab Propan zu verstehen, insbesondere Alkane und deren Gemische. Geeignete Kohlenwasserstoffgemische sind beispielsweise Rohbiogas- oder Roherdgasgemische. Es sind ohne weiteres auch flüssige Kohlenwasserstoffe, wie Öl, verwendbar. Flüssige Kohlenwasserstoffe können bei den herrschenden Reaktionstemperaturen rasch verdampft werden. Bevorzugte wasserstoffhaltige Verbindungen sind bei Umgebungstemperatur gasförmige wasserstoffhaltige Verbindungen, insbesondere ausgewählt aus der Gruppe umfassend Methan, Ethan, Schwefelwasserstoff, Ammoniak und/oder deren Mischungen. Methan ist ein besonders bevorzugtes wasserstoffhaltiges Gas.

Die erfindungsgemässe Vorrichtung erlaubt eine Pyrolyse durch die Umsetzung eines Kohlenwasserstoffs wie Methan zu Wasserstoff und Kohlenstoff, ohne dass umweltschädliches Kohlendioxid entsteht. Der dabei abgeschiedene Kohlenstoff lagert sich über der Metallschmelze an, und befindet sich somit vorerst als Teil eines Stoffgemisches umfassend zumindest Wasserstoff und Kohlenstoff im Sammelraum. Beim erfindungsgemässen Verfahren wird das Stoffgemisch umfassend den Kohlenstoff aus dem Sammelraum abgeführt und einer externen, dem Pyrolysereaktor nachgeordneten Separationsvorrichtung zugeführt, in welcher das Stoffgemisch zumindest in Kohlenstoff und ein Restgas getrennt wird. Vorteilhafterweise wird dem Sammelraum ein zusätzliches Fördergas zugeführt, welches insbesondere die Aufgabe hat, den Austrag des Kohlenstoffs aus dem Sammelraum zu unterstützen. Vorzugsweise wird der Druck und/oder die Menge und/oder die Fliessgeschwindigkeit und/oder der Einwirkort des Fördergases angesteuert, um derart auf den sich innerhalb des Sammelraums befindlichen Kohlenstoff zu einzuwirken, dass der sich vorzugsweise kontinuierlich an der Oberfläche neu bildende Kohlenstoff zuverlässig aus dem Sammelraum entfernt und vorzugsweise in die nachgelagerte Separationsvorrichtung gefördert werden kann. Es kann sich als vorteilhaft erweisen einen zusätzlichen, vorzugsweise ansteuerbaren Verdichter und/oder ein ansteuerbares Ventil vorzusehen, um den Druck und oder die Menge des dem Sammelraum zugeführte Fördergases anzusteuern.

Die Erfindung wird nachfolgend an Hand mehrerer Ausführungsbeispiele im Detail beschrieben.

Die zur Erläuterung der Ausführungsbeispiele verwendeten Zeichnungen zeigen:

Fig. 1     eine schematisch dargestellte Vorrichtung eines ersten Ausführungsbeispiels zur Pyrolyse wasserstoffhaltiger Verbindungen;

Fig. 2     einen Pyrolysereaktor im Detail;

Fig. 3     eine Trennvorrichtung im Detail;

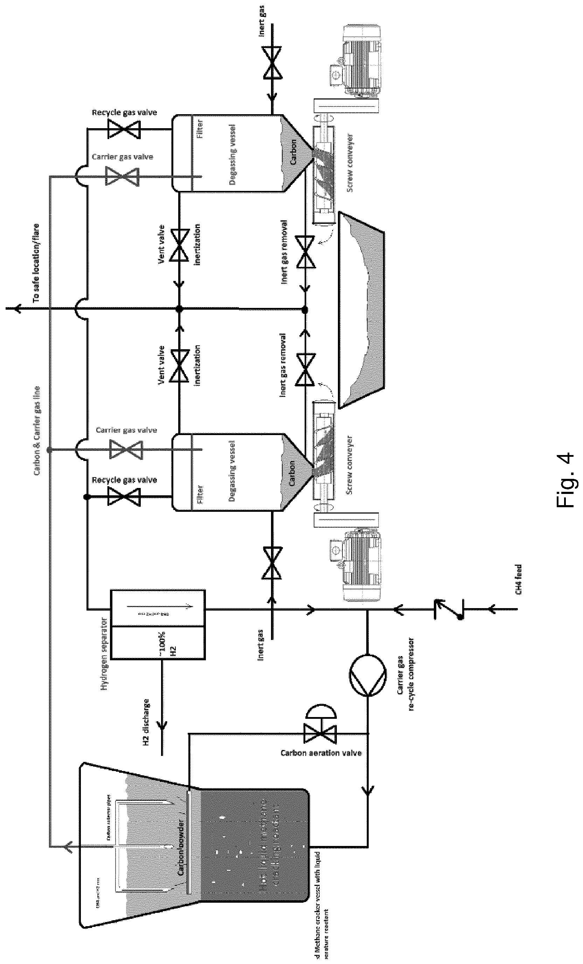

Fig. 4     ein zweites Ausführungsbeispiel einer Vorrichtung zum Erzeugen von Wasserstoff und festem Kohlenstoff.

Grundsätzlich sind in den Zeichnungen gleiche Teile mit gleichen Bezugszeichen versehen.

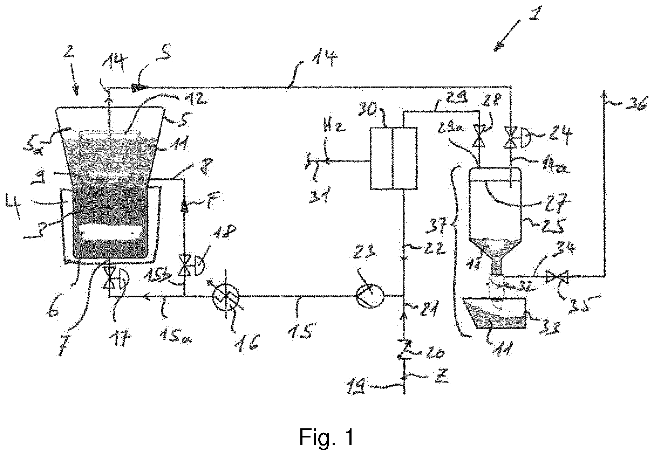

Fig. 1 zeigt eine Vorrichtung 1 zur Erzeugung von Wasserstoff H2 und festem Kohlenstoff 11 durch thermische Zersetzung eines Zufuhrgases Z enthaltend Kohlenwasserstoffe. Die Vorrichtung 1 umfasst einen Pyrolysereaktor 2 mit einem Reaktionsbehälter 3 umfassend einen Reaktionsraum 3a sowie mit einem oberhalb des Reaktionsraums 3a angeordneten Sammelbehälter 5 umfassend Sammelraum 5a. Der Reaktionsraum 3a ist zumindest teilweise mit einem flüssigen Hochtemperaturwärmeträger 6 gefüllt. Eine Reaktorzuleitung 7 mündet in den Reaktionsbehälter 3 bzw. in den Reaktionsraum 3a. Eine Einspeisung 19 für das Zufuhrgas Z ist Fluid leitend mit der Reaktorzuleitung 7 verbunden. Eine Heizvorrichtung 4 ist beim Reaktionsbehälter 3 angeordnet, um diesen und damit dem Reaktionsraum 3a Wärme zuzuführen. Eine im Sammelraum 5a angeordnete Ableitvorrichtung 12 dient zum Ableiten eines Stoffgemisches S aus dem Sammelraum 5a des Sammelbehälters 5. Eine ausserhalb des Pyrolysereaktors 2 angeordnete, dem Pyrolysereaktor 2 in Flussrichtung des Stoffgemisches S nachgeordnete Separationsvorrichtung 37 ist über die Ableitvorrichtung 12 und die Ableitung 14 mit dem Sammelraum 5a verbunden, sodass das sich im Sammelraum 5a befindliche Stoffgemisch S, und insbesondere der sich im Sammelraum 5a befindliche Kohlenstoff 11, der Separationsvorrichtung 37 zuführbar ist, und vorzugsweise selbsttätig zuführbar ist. Die Separationsvorrichtung 37 ist ausgestaltet zum Auftrennen des Stoffgemisches S in zumindest die Komponenten fester Kohlenstoff 11 und Wasserstoff H2, oder in die Komponenten fester Kohlenstoff 11 und ein Gasgemisch enthaltend Wasserstoff H2. Die Vorrichtung 1 umfasst zudem einen Kompressor 23 zum Verdichten des der Reaktorzuleitung 7 zugeführten Fluids.

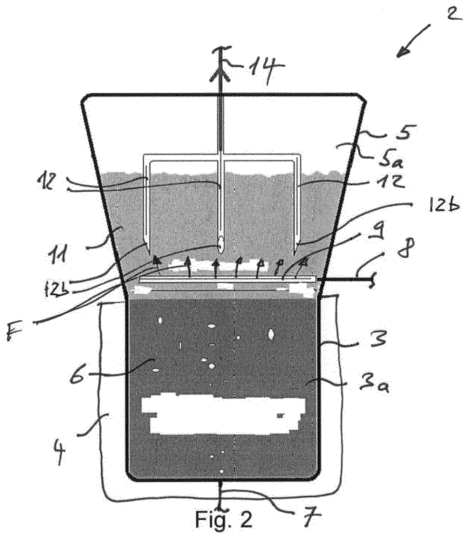

Figur 2 zeigt den in Figur 1 dargestellten Pyrolysereaktor 2 in vergrösserter Darstellung. Die Ableitvorrichtung 12 hat insbesondere den Zweck sicherstellen, dass das sich innerhalb des Sammelraums 5a befindliche Stoffgemisch S, und insbesondere der Kohlenstoff 11 zuverlässig und vorzugsweise kontinuierlich aus dem Sammelraum 5a hinausgefördert wird. In einer vorteilhaften Ausgestaltung umfasst die Ableitvorrichtung 12 eine Mehrzahl von Sammelrohren 12a mit Eingangsöffnungen 12b, welche im Sammelraum 5a angeordnet sind. Vorteilhafterweise sind die Sammelrohre 12a lanzenförmig ausgestaltet, mit zum Reaktionsraum 3a hin ausgerichteten Eingangsöffnungen 12b. In einer besonders vorteilhaften Ausgestaltung mündet eine Gaszufuhrleitung 8 in den Sammelraum 5a, deren Zweck insbesondere darin besteht, den Austrag des Kohlenstoffs 11 aus dem Sammelraum 5a zu unterstützen. In einer besonders vorteilhaften Ausgestaltung ist innerhalb des Sammelraums 5a zwischen dem Reaktionsraum 3a und den Eingangsöffnungen 12b der Ableitvorrichtung 12 eine Gasverteilvorrichtung 9 angeordnet, welcher von der Gaszufuhrleitung 8 ein Fördergas F zugeleitet wird, um durch das einströmende Fördergas F den sich im Sammelraum 5a befindlichen Kohlenstoff 11 vorzugsweise aufzulockern und den Eintrittsöffnungen 12 zuzuleiten.

Wie aus Figur 1 ersichtlich ist vorteilhafterweise ein Kompressor 23 vorgesehen, der zumindest das über dein Einspeisung 19 zugeführte Zufuhrgas Z zu verdichten. Dem Kompressor ist in Flussrichtung des zugeführten Fluids die Reaktorzuleitung 7 und vorzugsweise zudem die Fördergaszufuhrleitung 8 nachgeordnet. Zwischen dem Kompressor 23 und der Reaktorzuleitung 7 und/oder der Fördergaszufuhrleitung 8 ist vorzugsweise eine Zuleitung 15, 15a, 15b angeordnet, welche zudem beispielsweise durch einen Vorwärmer 16 geleitet sein kann. Es können zudem ein erstes und/oder ein zweites Ventil 17,18 vorgesehen sein, welche vorzugsweise von einer nicht dargestellten Steuervorrichtung ansteuerbar sind, um beispielsweise den Druck oder die Fördermenge des in den Reaktionsraum 3a geförderten Zufuhrgases Z anzusteuern, und/oder den Druck oder die Fördermenge des in den Sammelraum 5a geleiteten Fördergases F anzusteuern. Es kann sich als vorteilhaft erweisen den Druck des Fördergases 5 intermittierend zu verändern, z.B. durch ein während einer vorgegebenen Zeitdauer periodisches Ein- und Ausschalten des Fördergasstroms, oder durch eine Abfolge von Druckschwankungen des Fördergasstroms durch ein entsprechendes Schalten des Ventils 18, um dadurch insbesondere den sich im Sammelraum 5a befindlichen Kohlenstoff 11 aufzuwirbeln und dadurch den Austrag des Kohlenstoffs 11 aus dem Sammelraum 5a zu unterstützen. Es kann sich zudem als vorteilhaft erweisen den Zuleitungen 15a, 15b allenfalls einen zusätzlichen, vorzugsweise ansteuerbaren Verdichter zuzuschalten, um die Druckdifferenz des Gases zwischen der Zuleitung in den Reaktionsbehälter 3 und dem Sammelraum 5a zu beeinflussen und insbesondere anzusteuern.

In dem dem Pyrolysereaktor 2 nachgeordneten Entgasungsbehälter 25 wird der Kohlenstoff 11 vorzugsweise unter Druck aus dem zugeleiteten Stoffgemisch S getrennt. Wie in Figur 1 dargestellt umfass die Separationsvorrichtung 37 einen Entgasungsbehälter 25, der als Druckbehälter ausgestaltet ist, wobei Entgasungsbehälter 25 einen Entgasungsbehälterinnenraum 25a mit einem unteren Teilinnenraum 25b und einem oberen Teilinnenraum 25c umfasst. Der untere Teilinnenraum 25b mündet in eine Schleuse 32 zur Ausgabe des vorzugsweise staubförmigen Kohlenstoffs 11. Im Entgasungsbehälterinnenraum 25a ist vorteilhafterweise ein Partikelfilter 27 angeordnet ist, welches den Entgasungsbehälterinnenraum 25a in den unteren Teilinnenraum 25b und den oberen Teilinnenraum 25c unterteilt, dass die Ableitung 14 über zu Zufuhrleitung 14a in den unteren Teilinnenraum 25b mündet, wobei ein im oberen Teilinnenraum 25c angeordneter Gasauslass 29a eine Gasableitung 29 speist. Zudem können ansteuerbare Ventile 24, 28 vorgesehene sein. Die Gasableitung 29 mündet vorzugsweise in eine Wasserstofftrennvorrichtung 30, welche das zugeführte Fluid zumindest teilweise an Wasserstoff abreichert und einer Wasserstoffableitung 31 zuführt. Die Wasserstofftrennvorrichtung 30 umfasst vorzugsweise eine Vorrichtung zur Druckwechsel-Adsorption (auf Englisch "PSA - Pressure Swing Adsorption") oder eine Membran zum Abreichern des Wasserstoffs. Der Auslass der Wasserstofftrennvorrichtung 30 könnte an die Umwelt entlassen werden. Das in der Wasserstofftrennvorrichtung 30 an Wasserstoff abgereicherte Fluid wird vorzugsweise dem Pyrolysereaktor 2 zugeführt. Besonders bevorzugt wird das an Wasserstoff abgereicherte Fluid als eine zweite Gaszufuhr 22 rezykliert und vorzugsweise dem Reaktionsbehälter 3 zugeführt, vorteilhafterweise indem das Zufuhrgas Z über die Einspeisung 19 und eine erste Gaszufuhr 21 gemeinsam mit der zweiten Gaszufuhr 22 dem Verdichter 32 zugeführt wird. Vorteilhafterweise ist zwischen der ersten Gaszufuhr 21 und der Einspeisung 19 zudem noch ein Einlassventil 20 vorgesehen. Das an Wasserstoff abgereicherte Fluid könnte, ausgehend von der Wasserstofftrennvorrichtung 30, auch einem separaten, nicht dargestellten Kompressor zugeführt werden, und das derart komprimierte, Wasserstoff abgereicherte Fluid könnte vorteilhafterweise über die zweite Speisegaszuleitung 8 direkt dem Sammelraum 5a zugeführt werden.

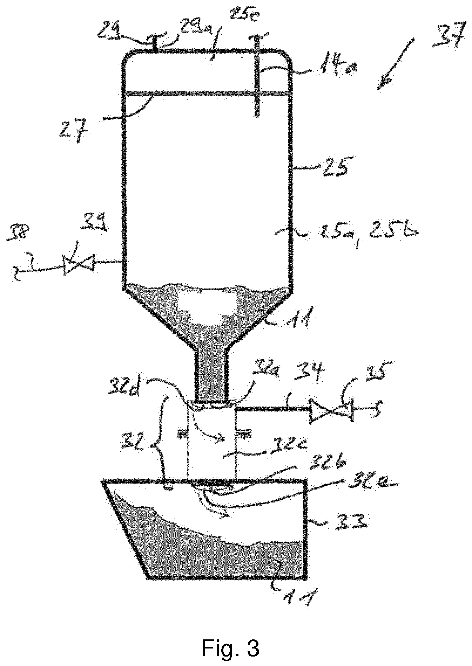

Figur 3 zeigt die Separationsvorrichtung 37 und insbesondere die Schleuse 32 im Detail. Die Schleuse 32 umfasst eine erste verschliessbare Öffnung 32a, einen Zwischenraum 32c sowie eine zweite verschliessbare Öffnung 32b, wobei diese Öffnungen 32a, 32b mit je einem ersten bzw. zweite schwenkbaren Deckel 32d, 32e ansteuerbar geöffnet und geschlossen werden können, sodass der sich im unteren Bereich des Entgasungsbehälters 25 befindliche Kohlenstoff 11 dem Speicherbehälter 33 zuführbar ist, und der im Innern des Entgasungsbehälters 25 anliegende Druck trotzdem aufrecht erhalten werden kann. Der Zwischenraum 32c ist vorzugsweise mit einer Druckentlastung versehen, und weist beispielsweise eine Ableitung 34 und ein nachfolgend angeordnetes Ventil 35 auf. Es kann sich zudem als vorteilhaft erweisen eine Intergaszuführen 38 sowie ein Ventil 39 vorzusehen, insbesondere um den Kohlenstoff 11 mit Hilfe des über die Intergaszuführung 38 zugeführten Intergases der Schleuse 32 zuzuführen. Als Intergas ist beispielsweise Stickstoff oder Kohlendioxid geeignet.

Das erfindungsgemässe Verfahren zur direkten thermischen Zersetzung einer wasserstoffhaltigen Verbindung in festen Kohlenstoff 11 und Wasserstoff H2 erfolgt derart, dass ein Kohlewasserstoffe enthaltendes Zufuhrgas Z verdichtet wird, das verdichtete Zufuhrgas Z anschliessend durch einen flüssigen Hochtemperaturwärmeträger 6 geleitet wird und das Zufuhrgas Z im Hochtemperaturwärmeträger 6 in ein Stoffgemisch S gewandelt wird, das Stoffgemisch S oberhalb des Hochtemperaturwärmeträgers 6 in einem Sammelraum 5a gesammelt wird, wobei das Stoffgemisch S zumindest den festen Kohlenstoff 11 und ein Gasgemisch enthaltend Wasserstoff H2 umfasst, das Stoffgemisch S einer dem Sammelraum 5a nachgeordneten Separationsvorrichtung 37 zugeführt wird und das Stoffgemisch S in der Separationsvorrichtung 37 von festem Kohlenstoff 11 abgereichert wird, wobei das abgereicherte Stoffgemisch S und der feste Kohlenstoff 11 getrennt aus der Separationsvorrichtung 37 abgeführt werden.

Vorzugsweise wird aus dem abgeführten, abgereicherten Stoffgemisch S nachfolgend Wasserstoff H2 abgereichert wird, wobei das an Wasserstoff H2 abgereicherte Stoffgemisch S vorzugsweise dem Pyrolysereaktor 2, und insbesondere dem sich darin befindlichen flüssigen Hochtemperaturwärmeträger 6 zugeleitet wird. Vorzugswiese wird das an Wasserstoff H2 abgereicherte Stoffgemisch S verdichtet bevor dieses anschliessend dem flüssigen Hochtemperaturwärmeträger 6 zugeleitet wird.

Vorzugsweise ein Fördergas F derart dem sich im Sammelraum 5a ansammelnden Stoffgemisch S zugeführt, dass zumindest ein Teile des sich im Sammelraum 5a befindlichen festen Kohlenstoffs 11 durch das einwirkende Fördergas F der Separationsvorrichtung 37 zugeführt wird. Vorzugsweise wird der Druck, die Fördermenge und/oder der Einwirkungsort des in den Sammelraum 5a einströmenden Fördergases F zeitlich verändert bzw. modulier, und der sich im Sammelraum 5a befindliche feste Kohlenstoff 11 dadurch aufgewirbelt, um derart die Zuleitung des Kohlenstoffs in die Ableitvorrichtung 12 zu unterstützen.

## Patentansprüche

1. Vorrichtung (1) zur Erzeugung von Wasserstoff ($H_2$) und festem Kohlenstoff (11) durch thermische Zersetzung eines Zufuhrgases (Z) enthaltend Kohlenwasserstoffe, umfassend:

   - einen Pyrolysereaktor (2) mit einen Reaktionsraum (3a) sowie einen oberhalb des Reaktionsraums (3a) angeordneten Sammelraum (5a), wobei der Reaktionsraum (3a) einen flüssigen Hochtemperaturwärmeträger (6) enthält;
   - eine in den Reaktionsraum (3a) mündende Reaktorzuleitung (7);
   - eine Einspeisung (19) für das Zufuhrgas (Z), wobei die Einspeisung (19) Fluid leitend mit der Reaktorzuleitung (7) verbunden ist;
   - eine Heizvorrichtung (4) um dem Reaktionsraum (3a) Wärme zuzuführen;
   - eine im Sammelraum (5a) angeordnete Ableitvorrichtung (12) zum Ableiten eines Stoffgemisches (S) aus dem Sammelraum (5a);
   - eine ausserhalb des Pyrolysereaktors (2) angeordnete Separationsvorrichtung (37), wobei die Ableitvorrichtung (12) über eine Ableitung (14) mit der Separationsvorrichtung (37) verbunden ist, und wobei die Separationsvorrichtung (37) ausgestaltet ist zum Auftrennen des Stoffgemisches (S) in zumindest die Komponenten fester Kohlenstoff (11) und Wasserstoff ($H_2$) oder ein Gasgemisch enthaltend Wasserstoff ($H_2$); sowie
   - einen Kompressor (23) zum Verdichten des der Reaktorzuleitung (7) zugeführten Fluides.

2. Vorrichtung nach Anspruch 1, **dadurch gekennzeichnet, dass** die Ableitvorrichtung (12) eine Mehrzahl von Sammelrohren (12a) mit Eingangsöffnungen (12b) umfasst, welche im Sammelraum (5a) angeordnet sind.

3. Vorrichtung nach Anspruch 2, **dadurch gekennzeichnet, dass** die Sammelrohre (12a) lanzenförmig ausgestaltet sind, mit zum Reaktionsraum (3a) hin ausgerichteten Eingangsöffnungen (12b) .

4. Vorrichtung nach einem der vorhergehenden Ansprüche, **dadurch gekennzeichnet, dass** eine Gaszufuhrleitung (8) in den Sammelraum (5a) mündet.

5. Vorrichtung nach Anspruch 4, **dadurch gekennzeichnet, dass** zwischen dem Reaktionsraum (3a) und den Eingangsöffnungen (12b) der Ableitvorrichtung (12) eine Gasverteilvorrichtung (9) angeordnet ist, welche von der Gaszufuhrleitung (8) gespeist ist.

6. Vorrichtung nach einem der Ansprüche 4 oder 5, **dadurch gekennzeichnet, dass** die Reaktorzuleitung (7) sowie die Gaszufuhrleitung (8) in Flussrichtung des zugeführten Fluides dem Kompressor (23) nachgeordnet sind.

7. Vorrichtung nach einem der vorhergehenden Ansprüche, **dadurch gekennzeichnet, dass** die Separationsvorrichtung (37) einen Entgasungsbehälter (25) umfasst, der als Druckbehälter ausgestaltet ist, und dass der Entgasungsbehälter (25) einen Entgasungsbehälterinnenraum (25a) mit einem unteren Teilinnenraum (25b) und einem oberen Teilinnenraum (25c) umfasst, wobei der untere Teilinnenraum (25b) in eine Schleuse (32) münden zur Ausgabe des festen Kohlenstoffs (11).

8. Vorrichtung nach Anspruch 7, **dadurch gekennzeichnet, dass** im Entgasungsbehälterinnenraum (25a) ein Partikelfilter (27) angeordnet ist, welches den Entgasungsbehälterinnenraum (25a) in den unteren Teilinnenraum (25b) und den oberen Teilinnenraum (25c) unterteilt, dass die Ableitung (14) in den unteren Teilinnenraum (25b) mündet, und dass ein im oberen Teilinnenraum (25c) angeordneter Gasauslass (29a) eine Gasableitung (29) speist.

9. Vorrichtung nach Anspruch 8, **dadurch gekennzeichnet, dass** die Gasableitung (29) in eine Wasserstofftrennvorrichtung (30) mündet, welche das zugeführte Fluid zumindest teilweise an Wasserstoff abreichert.

10. Vorrichtung nach Anspruch 9, **dadurch gekennzeichnet, dass** das an Wasserstoff abgereicherte Fluid dem Pyrolysereaktor (2) zugeführt ist.

11. Vorrichtung nach Anspruch 10, **dadurch gekennzeichnet, dass** das an Wasserstoff abgereicherte Fluid ausgehend von der Wasserstofftrennvorrichtung (30) dem Kompressor (23) zugeführt ist.

12. Verfahren zur direkten thermischen Zersetzung einer wasserstoffhaltigen Verbindung in festen Kohlenstoff (11) und Wasserstoff ($H_2$), indem:

- ein Kohlewasserstoffe enthaltendes Zufuhrgas (Z) verdichtet wird;
- das verdichtete Zufuhrgas (Z) anschliessend durch einen flüssigen Hochtemperaturwärmeträger (6) geleitet wird und das Zufuhrgas (Z) im Hochtemperaturwärmeträger (6) in ein Stoffgemisch (S) gewandelt wird;
- das Stoffgemisch (S) oberhalb des Hochtemperaturwärmeträgers (6) in einem Sammelraum (5a) gesammelt wird, wobei das Stoffgemisch (S) zumindest den festen Kohlenstoff (11) und ein Gasgemisch enthaltend Wasserstoff ($H_2$) umfasst;
- das Stoffgemisch (S) einer dem Sammelraum (5a) nachgeordneten Separationsvorrichtung (37) zugeführt wird und das Stoffgemisch (S) in der Separationsvorrichtung (37) von festem Kohlenstoff (11) abgereichert wird; und
- das abgereicherte Stoffgemisch (S) und der feste Kohlenstoff (11) getrennt aus der Separationsvorrichtung (37) abgeführt wird.

13. Verfahren nach Anspruch 12, **dadurch gekennzeichnet, dass** aus dem abgeführten, abgereicherten Stoffgemisch (S) nachfolgend Wasserstoff (H2) abgereichert wird, und dass das an Wasserstoff (H2) abgereicherte Stoffgemisch (S) dem flüssigen Hochtemperaturwärmeträger (6) zugeleitet wird.

14. Verfahren nach Anspruch 13, **dadurch gekennzeichnet, dass** das an Wasserstoff (H2) abgereicherte Stoffgemisch (S) verdichtet wird und anschliessend dem flüssigen Hochtemperaturwärmeträger (6) zugeleitet wird.

15. Verfahren nach einem der Ansprüche 12 bis 14, **dadurch gekennzeichnet, dass** ein Fördergas (F) derart dem sich im Sammelraum (5a) ansammelnden Stoffgemisch (S) zugeführt wird, dass zumindest ein Teil des sich im Sammelraum (5a) befindlichen festen Kohlenstoffs (11) durch das einwirkende Fördergas (F) der Separationsvorrichtung (37) zugeführt wird.

16. Verfahren nach Anspruch 15, **dadurch gekennzeichnet, dass** der Druck, die Fördermenge und/oder der Einwirkungsort des in den Sammelraum (5a) einströmenden Fördergases (F) zeitlich verändert wird, und der sich im Sammelraum (5a) befindliche feste Kohlenstoff (11) dadurch aufgewirbelt wird.

Fig. 1

Fig. 2

Fig. 3

Fig. 4

Europäisches
Patentamt
European
Patent Office
Office européen
des brevets

**EUROPÄISCHER RECHERCHENBERICHT**

Nummer der Anmeldung

**EP 22 15 9519**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2021/232158 A1 (UNIV BRITISH COLUMBIA [CA]) 25. November 2021 (2021-11-25) | 1-3,7-14 | INV.<br>B01J6/00 |
| Y | * Zusammenfassung *<br>* Ansprüche 1,13,18,21,25,55-57,93,101-103 *<br>* Abbildungen 1,7,8 *<br>* Absätze [0154] – [0158], [0200] – [0213] * | 4-6,15,<br>16 | B01J10/00<br>C01B3/24<br>C01B3/50<br>C01B32/05 |
| | ----- | | |
| Y | US 2020/283293 A1 (MCFARLAND ERIC W [US] ET AL) 10. September 2020 (2020-09-10)<br>* Zusammenfassung *<br>* Abbildung 2 *<br>* Absatz [0080] * | 4-6,15,<br>16 | |
| | ----- | | |
| A | EP 3 693 337 A1 (TNO [NL])<br>12. August 2020 (2020-08-12)<br>* Zusammenfassung *<br>* Ansprüche 1,4-7, 11,12, 14 *<br>* Abbildungen 1,2 *<br>* Absätze [0032], [0033], [0050] * | 1-16 | |
| | ----- | | **RECHERCHIERTE SACHGEBIETE (IPC)** |
| A | US 2020/071164 A1 (GUPTA RAMESH [US] ET AL) 5. März 2020 (2020-03-05)<br>* Zusammenfassung *<br>* Abbildungen 1,5 *<br>* Ansprüche 1,8,18-25 *<br>* Absätze [0029] – [0034], [0062], [0063] * | 1-16 | B01J<br>C01B |
| | ----- | | |
| A | DE 10 2013 112205 A1 (TECH UNIVERSITÄT DORTMUND [DE]) 8. Mai 2014 (2014-05-08)<br>* Zusammenfassung *<br>* Abbildung 1 *<br>* Ansprüche 1,2 *<br>* Absätze [0024], [0025] * | 1-16 | |
| | ----- | | |

Der vorliegende Recherchenbericht wurde für alle Patentansprüche erstellt

| Recherchenort | Abschlußdatum der Recherche | Prüfer |
|---|---|---|
| München | 5. August 2022 | Alvarez Rodriguez, C |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
    .....................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 15 9519

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-08-2022

| Im Recherchenbericht angeführtes Patentdokument | Datum der Veröffentlichung | Mitglied(er) der Patentfamilie | Datum der Veröffentlichung |
|---|---|---|---|
| WO 2021232158 A1 | 25-11-2021 | KEINE | |
| US 2020283293 A1 | 10-09-2020 | AU 2018370138 A1 | 02-07-2020 |
| | | CA 3082819 A1 | 23-05-2019 |
| | | CN 111936227 A | 13-11-2020 |
| | | EP 3710152 A1 | 23-09-2020 |
| | | JP 2021503430 A | 12-02-2021 |
| | | KR 20200086352 A | 16-07-2020 |
| | | US 2020283293 A1 | 10-09-2020 |
| | | WO 2019099795 A1 | 23-05-2019 |
| EP 3693337 A1 | 12-08-2020 | AU 2020219401 A1 | 26-08-2021 |
| | | CA 3128413 A1 | 13-08-2020 |
| | | EA 202192174 A1 | 25-10-2021 |
| | | EP 3693337 A1 | 12-08-2020 |
| | | EP 3921278 A1 | 15-12-2021 |
| | | JP 2022519635 A | 24-03-2022 |
| | | KR 20210122301 A | 08-10-2021 |
| | | US 2022119259 A1 | 21-04-2022 |
| | | WO 2020161192 A1 | 13-08-2020 |
| US 2020071164 A1 | 05-03-2020 | US 2020071164 A1 | 05-03-2020 |
| | | WO 2020046583 A1 | 05-03-2020 |
| DE 102013112205 A1 | 08-05-2014 | KEINE | |

EPO FORM P0461

Für nähere Einzelheiten zu diesem Anhang : siehe Amtsblatt des Europäischen Patentamts, Nr.12/82

**EP 4 238 639 A1**

**IN DER BESCHREIBUNG AUFGEFÜHRTE DOKUMENTE**

**In der Beschreibung aufgeführte Patentdokumente**

- WO 2019154732 A1